**Europäisches Patentamt**

**European Patent Office**

**Office européen des brevets**

(19)

(11) Veröffentlichungsnummer: **0 431 165 A1**

(12) **EUROPÄISCHE PATENTANMELDUNG**
veröffentlicht nach Art. 158 Abs. 3
EPÜ

(21) Anmeldenummer: 89910469.9

(51) Int. Cl.5: **C04B 35/58**

(22) Anmeldetag: 30.06.89

(86) Internationale Anmeldenummer:
PCT/SU89/00181

(87) Internationale Veröffentlichungsnummer:
WO 91/00254 (10.01.91 91/02)

(43) Veröffentlichungstag der Anmeldung:
**12.06.91 Patentblatt 91/24**

(84) Benannte Vertragsstaaten:
**AT CH DE FR GB IT LI NL SE**

(71) Anmelder: **INSTITUT STRUKTURNOI
MAKROKINETIKI AKADEMII NAUK SSSR
Moskovskaya oblast
Poselok Chernogolovka 142432(SU)**

(72) Erfinder: **MERZHANOV, Alexandr Grigorievich
ul. Tretya, 3-2
Moskovskaya obl.
pos. Chernogolovka, 142432(SU)**
Erfinder: **STOLIN, Alexandr Moiseevich**

Institutsky pr., 6-86
Moskovskaya obl.
pos. Chernogolovka, 142432(SU)
Erfinder: **BUCHATSKY, Leonid Mikhailovich ul.
Lesnaya, 5-99**
Moskovskaya obl.
pos. Chernogolovka, 142432(SU)
Erfinder: **VEDENEEV, Sergei Vladimirovich**
proezd Stroitelei, 4-48 Moskovskaya obl.
pos. Chernogolovka, 142432(SU)

(74) Vertreter: **Nix, Frank Arnold, Dr.
Kröckelbergstrasse 15
W-6200 Wiesbaden(DE)**

(54) **VERFAHREN ZUR HERSTELLUNG KERAMISCHEN KOMPOSITMATERIALS.**

(57) Die Erfindung bezieht sich auf das Gebiet der Herstellung eines neuen Keramikverbundwerkstoffs, der Molybdändisilizid in Körnerform mit einer Teilchengrösse von 20 bis 60 μm aufweist.

Das Verfahren sieht die Herstellung einer exothermen Mischung, welche Silizium, Molybdänoxid (VI), Aluminium und Molybdän bei folgendem Verhältnis zwischen den Komponenten (Masse%):

| | |
|---|---|
| Silizium | 29 bis 38 |
| Molybdänoxid (VI) | 7 bis 42 |
| Aluminium | 3 bis 16 |
| Molybdän | 13 bis 52 |

enthält, deren Wärmebehandlung unter Verbrennungsbedingungen mit anschliessender Verdichtung der entstehenden Verbrennungsprodukte durch eine mindestens zweifache Stauchung bis zu einem Umformungsgrad von 0,75 bis 0,90 in jeder Stufe bei einer Temperatur von 1500 bis 1900° C vor.

## KERAMIKVERBUNDWERKSTOFF UND VERFAHREN ZU SEINER HERSTELLUNG

Technisches Gebiet

Die vorliegende Erfindung bezieht sich auf einen neuen Keramikverbundwerkstoff und auf ein Verfahren zu seiner Herstellung.

Der erfindungsgemässe Werkstoff ist gegen Hochtemperaturoxydation beständig und kann als Schutzüberzug und Werkstoff für die Herstellung von elektrischen Heizelementen, die in der chemischen Industrie und im Hüttenwesen eingesetzt werden, eine breite Anwendung finden.

Zugrundeliegender Stand der Technik

Die zur Zeit bekannten Keramikverbundwerkstoffe, welche auf der Basis von Molybdändisilizid hergestellt sind, sind durch nicht ausreichend hohe Grenzbetriebstemperaturen (höchstens 1750° C) gekennzeichnet und sie können es nicht gewährleisten, dass die aus diesen Werkstoffen herzustellenden Erzeugnisse hohe Kennziffern des spezifischen elektrischen Widerstandes und und der Periodizität der Temperaturwechselbelastung bei diesen Temperaturen beibehalten. Da diese Kennzeiffern zu den Hauptkriterien für die Qualität der aus diesen Werkstoffen herzustellenden elektrischen Hochtemperatur-Heizelemente und Überzüge gehören, welche in oxydierender Umgebung und bei zwischen 1100 und 1900° C liegenden Temperaturen eingesetzt werden, ist es offensichtlich, dass sie den Wachsenden Anforderungen nicht entsprechen, welche an deren Verwendung gestellt werden. Die aus diesen Werkstoffen hergestellten Erzeugnisse sind insbesondere unter den Bedingungen eines starken und häufigen Temperaturgefälles betriebsunzuverlässig.

Die genannten Keramikverbundwerkstoffe werden nach dem Sinterungsverfahren in mehreren Stufen hergestellt. Zuerst wird nach einem Ofenverfahren oder durch alumothermische Reduktion Molybdändisilizid gewonnen, das anschliessend von Beimengungen abgetrennt, feinzerkleinert wird und mit Metalloxiden vermischt wird, die durch eine Schmelztemperatur von über 1300° C gekennzeichnet sind. Dem fertiggestellten Gemisch wird ein Plastifizierungsmittel zugesetzt, und nach dem Strangpressverfahren wird ein Rohling geformt. Die hergestellten Rohlinge werden einer mehrstündigen Trocknung ausgesetzt und anschliessend bei einer Temperatur von 900 bis 1300° C im Wasserstoffstrom bis zur Herstellung des Erzeugnisses gesintert. Das Verfahren zur Herstellung von Keramikverbundwerkstoffen durch Sinterung ist durch eine mehrstufige Durchführung, einen hohen Energieverbrauch gekennzeichnet, nimmt viel Zeit in Anspruch, erfordert in einigen Stufen die Verwendung von Stoffen, die die Eigenschaften der herzustellenden Werkstoffe negativ beeinflussen.

Es ist ein Keramikverbundwerkstoff auf der Basis von Molybdändisilizid bekannt, der Zwei Komponenten enthält (GB, A,780735). Als erste Komponente enthält er Molybdändisilizid mit einer Korngrösse von unter 10 $\mu$m oder ein Gemisch desselben mit Siliziden von hochschmelzenden Metallen oder in Form einer festen Lösung mit diesen Siliziden. Als zweite Komponente dient Siliziumoxid, das in Kombination mit Aluminium-,Beryllium-, Kalzium-, Magnesium-, Titanoxiden sowie Oxiden von anderen hochschmelzenden Metallen in Form einer festen Lösung oder eines Gemisches eingesetzt wird. Diese Werkstoffe werden durch Sinterung eines Pulvergemisches der genannten Silizide und Oxide hergestellt.

Die Beständigkeit der genannten Werkstoffe gegen Hochtemperaturoxydation ist darauf zurückzuführen, dass sich an deren Oberfläche ein dünner Film auf der Basis von Siliziumoxid bildet, der eine weitere Oxydation des unter diesem Film liegenden Werkstoffes verhindert. Bei Temperaturen von über 1750° C wird jedoch eine intensive Verdampfung von der Werkstoffoberfläche eingeleitet, was zu einer starken Vergrösserung der Oxydationsgeschwindigkeit des Werkstoffes und zu einer Zerstörung des auf dessen Grundlage hergestellten Erzeugnisses führt. Die Korngrösse des Molybdändisilizides, welche unter 10 $\mu$m liegt, gewährleistet optimale Bedingungen für den Ablauf des Sinterungsprozesses, spielt jedoch eine negative Rolle im Einsatz . Bei höheren Temperaturen nimmt die Korngrösse auf das 4- bis 8fache zu, wobei sich ein zusätzlicher Porenraum bildet, der zu einer Versprödung des Werkstoffes und zur Zerstörung des auf seiner Basis hergestellten Erzeugnisses beim Einsatz desselben führt.

Offenbarung der Erfindung

Der vorliegenden Erfindung liegt die Aufgabe zugrunde, einen Keramikverbundwerkstoff auf der Basis von Molybdändisilizid zu entwickeln, der durch höhere Kennziffern der Grenzbetriebstemperaturen, des spezifischen elektrischen Widerstandes und der Periodizität der Temperaturwechselbelastung bei diesen

EP 0 431 165 A1

Temperaturen infolge einer Änderung der Zusammensetzung und der Ausbildung einer entsprechenden Struktur dieses Werkstoffes gekennzeichnet ist, sowie ein Verfahren zur Herstellung dieses Werkstoffes durch die Wahl entsprechender Bedingungen des technologischen Fertigungsablaufes zu schaffen, der dem Werkstoff erforderliche Eigenschaften verleiht.

Die Aufgabe wird dadurch gelöst, dass ein Verfahren zur Herstellung des erfindungsgemässen Keramikverbundwerkstoffes, das die Zubereitung eines Gemisches, welches Silizium und eine Molybdänverbindung enthält, und die Wärmebehandlungdieses Gemisches umfasst, vorgeschlagen wird, bei dem man erfindungsgemäss in das erwähnte Gemisch als Molybdänverbindung Molybdänoxid (VI) und zusätzlich Aluminium und Molybdän bis zur Bildung einer exothermen Mischung folgender Zusammensetzung (Masse%):

| Silizium | 29 bis 38 |
| Molybdänoxid (VI) | 7 bis 42 |
| Aluminium | 3 bis I6 |
| Molybdän | I3 bis 52 |

einführt, die Wärmebehandlung des exothermen Gemischs unter Verbrennungsbedingungen durchführt und anschliessend die sich bildenen Verbrennungsprodukte durch eine mindestens zweifache Stauchung derselben bis zu einem Umformungsgrad von 0,75 bis 0,90 in jeder Stufe bei einer Temperatur von 1500 bis 1900°C verdichtet. Die geringe Energieintensität und die Möglichkeit,Keramikverbundwerkstoff in einem technologischen Fertigungsprozess, d.h. im wesentlichen in einer Stufe herzustellen, verleihen dem erfindungsgemässen Verfahren eine hohe Wirksamkeit, welche die entsprechende Kennziffern für Verfahren zur Herstellung solcher Werkstoffe durch Sinterung bedeutend übersteigt.

Es ist wünschenswert, für die Durchführung der Verbrennung unter optimalen Verbrennungsbedingungen eine exotherme Mischung mit einer Dispersität von 1 bis 63 $\mu$m aufzubereiten und vor der Wärmebehandlung diese bis zu einer relativen Dichte von 0,4 bis 0,6 zu verdichten.

Es ist empfehlenswert, die Stauchung der Verbrennungsprodukte durch das Durchdrücken derselben durch eine auf 200 bis 350°C erwärmte Matrize vorzunehmen. Gleichzeitig mit der Verdichtung und der endgültigen Ausbildung der Struktur des erfindungsgemässen Werkstoffes wird die Möglichkeit geschaffen, Teile, z.B. elektrische Heizelemente zu formen.

Der erhaltene Keramikverbundwerkstoff kann Temperaturen von bis zu 1900°C in einem oxydierenden Mittel und an der Luft eine längere Zeit aushalten, ist durch eine hohe Periodizität der Temperaturwechselbelastung (bis zu 260 Zyklen), hohe Werte des spezifischen elektrischen Widerstandes (bis zu 373 $\mu\Omega$cm bei einer Temperatur von 1650°C) gekennzeichnet.

Es ist zweckmässig zur Bewahrung von stabilen Eigenschaften des erfindungsgemässen Werkstoffes bei einer längeren Einwirkung von hohen Temperaturen, wenn das in diesem enthaltene Molybdändisilizid körnige Struktur mit einer Korngrösse von 20 bis 60 $\mu$m aufweist.

Der erfindungsgemäss hergestellte Keramikverbundwerkstoff enthält hochschmelzende Verbindungen vom Typ $Al_2O_3$ und $Al_xSi_yO_z$, worin x = 2; 6, y = 3; 6, z = 5; 13 ist, wobei diese einen Schutzfilm auf der Oberfläche von Molybdändisilizid bilden und dadurch die Beständigkeit des Stoffes gegen Hochtemperaturoxydation im Einsatz steigern; infolgedessen wird der Temperaturenbereich weiter, bei dem die Betriebskennwerte nicht herabgesetzt werden.

Eine kennzeichnende Besonderheit des erfindungsgemässen Werkstoffes besteht darin, dass die Ausbildung der Struktur des Werkstoffes im Bereich der Vorschmelztemperatur beginnt, die beim Brennen entwickelt werden, und beim darauffolgenden Stauchen vollendet wird. Im Ergebnis entsteht ein durchgehendes Gerüst aus den verwachsenen Körnern des Molybdändisilizids mit einer Teilchengrösse von 20 bis 60 $\mu$m, zwischen denen das Gemisch aus $Al_xSi_yO_z$ und Aluminiumoxid angeordnet wird. Da diese Struktur bei der Erstarrung von den Temperaturen, die die Grenzbetriebstemperatur übersteigen, gebildet wird, führt eine weitere Verwendung des Werkstoffes zu keinen Änderungen seiner Struktur, wodurch eine hohe Betriebszuverlässigkeit der aus diesem Werkstoff hergestellten Erzeugnisse gewährleistet wird. Bei den Werkstoffen, die durch Sinterung bei Temperaturen, welche unter der Grenzbetriebstemperatur liegen, hergestellt werden, ist ein Kornwachstum während des Betriebes zu verzeichnen, was zur einer Verschlechterung der physikalisch-mechanischen Eigenschaften (Versprödung, Aufblähung, Zerstörung) dieser Werkstoffe führt.

Die Zusammensetzung und die Struktur des erfindungsgemässen Werkstoffes werden durch die Zusammensetzung der exothermen Mischung durch die Bedingungen der Wärmebehandlung und der

3

Verdichtung der Verbrennungsprodukte bestimmt. Dadurch dass in die exotherme Mischung neben Silizium Molybdänoxid (VI), Aluminium und Molybdän eingeführt werden, wird die Gewinnung des Werkstoffes erforderlicher Zusammensetzung und Struktur unter den Verbrennungsbedingungen gewährleistet, die keine Zuführung der Reagenzien von aussen notwendig macht. Dabei war keine Umsetzung von Silizium mit Luftsauerstoff zu verzeichnen, was bei den speziellen durchgeführten Experimenten zur Verbrennung der genannten exothermen Mischung im Argonmedium geprüft wurde. In allen Fällen blieb die Phasen- und die chemische Zusammensetzung der Verbrennungsprodukte unverändert, es war keine Siliziumoxidbildung zu verzeichnen. Eine Nichteinhaltung des genannten Verhältnisses zwischen den Komponenten der exothermen Mischung führt entweder zu einer Aufspaltung des Werkstoffes in Molybdändisilizid und Aluminiumoxid oder zur Unmöglichkeit der Durchführung der Verbrennung. In beiden Fällen bildet sich der erfindungsgemässe Keramikverbundwerkstoff nicht. Um die Verbrennung unter optimalen Verbrennungsbedingungen zu ermöglichen, ist es zweckmässig, die exotherme Mischung mit einer Dispersität von 1 bis 63 $\mu$m aufzubereiten. Bei der Verbrennung der genannten exothermen Mischung bilden sich Verbrennungsprodukte in Form einer porösen Masse, in der das Porenvolumen 50 % erreichen kann. Unter diesen Bedingungen können die Prozesse des Wachstums von Molybdändisilizidkörnernund deren Koaleszenz nicht zur bildung eines gebundenen Gerüstes führen, das die erforderlichen elektrisch-physikalischen, mechanischen und Betriebseigenschaften bestimmt. Die vorhandenen Mikroinhomogenitäten kommen nicht dazu, sich im Volumen umzuverteilen, wobei Abschnitte mit einem nicht ausreichenden Siliziumgehalt entstehen, was zur Bildung von niederen Siliziden $Mo_5Si_3$ und $Mo_3Si$ führt, welche die Eigenschaften des Werkstoffes verschlechtern. Zur Vollendung der Strukturbildung und der Ausbildung von Körnern mit erforderlicher Korngrösse muss man die unter den Verbrennungsbedingungen erhaltene heisse poröse Masse von Verbrennungsprodukten bis zu einer Porösität von höchstens 10% verdichten. Zu diesem Zweck wird diese einer Stauchung bei einer Temperatur von 1500 bis 1900° C mindestens in zwei Stufen mit einem Umformungsgrad von 0,75 bis 0,90 für jede von diesen Stufen ausgesetzt. Im Ergebnis erhält man einen Keramikverbundwerkstoff in verdichteter Form, der ohne eine weitere wesentliche mechanische Bearbeitung zur Herstellung von elektrischen Heizelementen oder Speicherplatten und Elektroden zum Aufbringen von Schutzüberzügen verwendet kann. Bei einer Temperatur von über 1900° C bilden sich in dem erfindungsgemässen Werkstoff niedere Molybdändisilizide, wobei das Molybdändisilizid in einer instabilen $\beta$-Phase vorliegt. Bei einer Temperatur von unter 1500° C lassen sich die Verbrennungsprodukte ohne Zerstörung nicht stauchen. In einem Temperaturenbereich von 1500 bis 1900° C kann jedoch ein höherer Umformungsgrad, der als $\psi = 1 - S/S_o$ ermittelt wird, worin $S_o$ - Anfangsfläche des Querschnittes des Rohlings, S - Endfläche des Querschnittes des Rohlings bedeuten, auch zu einer Zerstörung des herzustellenden Werkstoffes führen. Im Ergebnis der durchgeführten Experimente wurde festgestellt, dass diese bei einem Umformungsgrad von über 0,90 in einer Stufe eintritt, während bei einem Umformungsgrad von unter 0,75 die Verdichtung der Verbrennungsprodukte für die Vollendung der Strukturbildung nicht ausreicht. Um eine stabile Verbrennung zu gewährleisten, ist es wünschenswert, die exotherme Mischung bis zu einer relativen Dichte von 0,4 bis 0,6 zu verdichten.

Beste Ausführungsvariante der Erfindung

Man bereitet eine exotherme Mischung aus Pulvern von Silizium, Molybdänoxid (VI), Aluminium und Molybdän bei einem Masseverhältnis von 35:17:6:42 mit einer Dispersität von 1 bis 63 $\mu$m durch ein sorgfältiges Vermischen derselben in einer Trommelmühle auf. Die erhaltene exotherme Mischung wird in eine Reaktionsvorrichtung eingeführt, in der mittels einer erhitzten Wolframspirale eine Verbrennungsreaktion eingeleitet wird. In 7 Sekunden werden die entstandenen Verbrennungsprodukte bei einer Temperatur von 1750° C durch zwei hintereinander angeordnete Öffnungen einer Matrize mit einem Durchmesser von 15 und 6 mm durchgedrückt, was jeweils einem Umformungsgrad der Verbrennungsprodukte von 0,82 bzw. 0,84 entspricht. Die Matrize ist auf eine Temperatur von 250° C vorgewärmt. Man erhält einen Keramikverbundwerkstoff in Form eines Kernes, der zu 87,5 Masse% aus Molybdändisilizid und zu 12,5 Masse% aus $Al_xSi_yO_z$-Gemisch Aluminiumoxid besteht. Die Korngrösse des Molybdändisilizid beträgt 30 bis 50 $\mu$m. Der gewonnene Werkstoff des Kernes weist folgende Kenndaten auf:

4

Grenzbetriebstemperatur, °C                 1900

spezifischer elektrischer
Widerstand, $\mu \Omega$ cm
bei Temperaturen, °C:

20                                        56

1650                                   338


Periodizität der Temperaturwechselbelastung,

Anzahl der Zyklen:

kurzer Zyklus                       262

langer Zyklus                       190

Der Begriff "kurzer Zyklus" bedeutet die Erwärmung des Werkstoffes auf die Grenzbetriebstemperatur innerhalb von 30 Sekunden, Halten des Werkstoffes bei dieser Temperatur innerhalb von 15 Minuten, Abkühlung auf die Raumtemperatur innerhalb von 10 Minuten. Nach dieser Kennziffer wird die Beständigkeit des Werkstoffes gegen Wärmeschocks bewertet. Infolge der starken Temperaturgefälle kann der Schutzüberzug an der Oberfläche des Werkstoffes rissig werden, was zu einer beschleunigten Zerstörung der aus dem zu prüfenden Werkstoff hergestellten Erzeugnisse führen kann.

Je fester der Schutzüberzug des Werkstoffes ist, je näher der Wärmeausdehnungskoeffizient dieses Schutzüberzuges an dem Wärmeausdehungskoeffizienten des Werkstoffes liegt, desto höher ist die Anzahl solcher Zyklen, die der Werkstoff aushalten kann.

Der Begriff "langer Zyklus" bedeutet die Erwärmung des Werkstoffes auf die Grenzbetriebstemperatur innerhalb von 30 Sekunden, Halten des Werkstoffes während 16 Stunden und Abkühlung auf eine Temperatur von 300° C innerhalb von 8 Stunden. Er kennzeichnet die Einsatzfähigkeit des Werkstoffes als elektrische Heizelemente und Überzüge beim intermittierenden Betrieb, der mit einem wechselnden Charakter der Produktion verbunden ist.

Durch die ausgedehnte Verweilzeit beim Halten des Werkstoffes bei einer Temperatur von unter 1100° C wird die Geschwindigkeit der Oxydation desselben erhöht, was dazu führt, dass der Werkstoff eine niedrigere Anzahl von Zyklen bis zu seiner Zerstörung aushalten kann. Nachstehend werden konkrete Ausführungsbeispiele der vorliegenden Erfindung angeführt.

Beispiel 1

Man bereitet eine exotherme Mischung aus Pulvern von Silizium, Molybdänoxid (VI), Aluminium und Molybdän bei einem Masseverhältnis von 36:14:5:45 mit einer Dispersität von 1 bis 63 $\mu$m. Aus der erhaltenen Mischung werden zylindrische Rohlinge mit einer Masse von 100 g, einem Durchmesser von 70 mm, und einer Höhe von 25 mm bei relativer Dichte der Mischung von 0,48 hergestellt, die in einer Reaktionsvorrichtung untergebracht werden. In den Rohlingen wird mittels einer erhitzten Wolframspirale eine Verbrennungsreaktion eingeleitet. Nach 6,5 Sekunden werden die Verbrennungsprodukte bei einer Temperatur von 1820° C durch zwei hintereinander angeordnete Walzen geführt, die einen Umformungsgrad der Verbrennungsprodukte von 0,75 je Walze gewährleisten. Dadurch wird ein Keramikwerkstoff in Form einer Platte mit einer Dicke von 3 mm hergestellt, der folgende Zusammensetzung (Masse%) hat: $MoSi_2$ - 85 und $Al_xSi_yO_z$-Gemisch - 15. Die hergestellte Platte des Werkstoffes ist durch folgende Kennziffern gekennzeichnet:

| Grenzbetriebstemperatur, $^{\circ}C$ | I900 |
|---|---|

spezifischer elektrischer
Widerstand, $\mu\Omega$ cm, bei Temperaturen, $^{\circ}C$:

| | |
|---|---|
| 20 | 58 |
| I650 | 340 |

Periodizität der Temperaturwechselbelastung, Anzahl der Zyklen:

| | |
|---|---|
| kurzer Zyklus | 250 |
| langer Zyklus | I70 |

Bei einer minimalen Bearbeitung (Schneiden, Anschweissen der Stromzuleitungen) kann aus der Platte ein elektrisches Heizelement hergestellt werden, das in Öfen mit oxydierendem Mittel oder Luft bei einer Temperatur bis zu 1900°C seine Anwendung finden kann. Das vorliegende Beispiel veranschaulicht die Wirksamkeit des erfindungsgemässen Verfahrens. In einem technologischenZyklus erhält man innerhalb von einigen Dutzenden von Sekunden bei einem minimalen Elektroenergieverbrauch aus Pulver von Ausgangskomponenten einen Keramikverbundwerkstoff in einer Form, die für die praktische Anwendung des Werkstoffes als elektrisches Heizelement geeignet ist.

Beispiel 2

Man bereitet eine exotherme Mischung aus Pulvern von Silizium, Molybdänoxid(VI), Aluminium und Molybdän bei einem Masseverhältnis von 33:27:9:31 mit einer Dispersität von 1 bis 63 $\mu$m. Aus der erhaltenen exothermen Mischung werden zylindrische Rohlinge mit einer Masse von 70 g, einem Durchmesser von 35 mm und einer Höhe von 30 mm bei relativer Dichte der Mischung von 0,54 hergestellt. Die Rohlinge werden in einer Reaktionsvorrichtung untergebracht, wo in diesen eine Verbrennungsreaktion eingeleitet wird. In 6,4 Sekunden werden die entstandenen Verbrennungsprodukte bei einer Temperatur von 1750°C durch drei aufeinanderfolgend angeordnete Öffnungen einer Matrize, deren Durchmesser 17,5 mm, 8 mm bzw.3 mm betragen, durchgedrückt, was einer Stauchung mit einem Umformungsgrad von jeweils 0,75, 0,79 bzw. 0,86 entspricht. Man erhält einen Keramikverbundwerkstoff in Form eines Kernes mit einem Durchmesser von 3 mm, der 75 Masse% $MoSi_2$ und 25 Masse% Gemisch $Al_xSi_yO_z$ und $Al_2O_3$ enthält. Der hergestellte Werkstoff ist durch folgende:

Kenndaten der Eigenschaften gekennzeichnet:

| Grenzbetriebstemperatur, $^{\circ}C$ | I880 |
|---|---|

spezifischer elektrischer
Widerstand, $\mu\Omega \cdot$ cm bei
Temperaturen, $^{\circ}C$:

| | |
|---|---|
| 20 | 62 |
| I650 | 360 |

Periodizität der Temperaturwechselbelastung, Anzahl der Zyklen:

| | |
|---|---|
| kurzer Zyklus | 22I |
| langer Zyklus | I40 |

Nachstehend werden in der Tabelle andere Ausführungsbeispiele der vorliegenden Erfindung angeführt, in denen die Stauchung in zwei Stufen durch Durchdrücken der Reaktionsprodukte durch Öffnungen einer vorgewärmten Matrize vorgenommen wird, wobei Zusammensetzung der exothermen Mischung, Parameter des technologischen Fertigungsablaufes, Zusammensetzung und Kennziffern der Eigenschaften des herzustellenden erfindungsgemässen Keramikverbundwerkstoffes angegeben werden.

## Tabelle

| Nr. der Beispiele | Zusammensetzung der exothermen Mischung, Masse% | | | | Stauchung der Verbrennungsprodukte in der Matrize | | | |
| | Si | MoO$_3$ | Al | Mo | Umformungsgrad in Stufen | | Temperatur, °C | Temperatur der Matrize, °C |
| | | | | | I | II | | |
| I | 2 | 3 | 4 | 5 | 6 | 7 | 8 | 9 |
| 3 | 38 | 7 | 3 | 52 | 0,82 | 0,84 | 1750 | 200 |
| 4 | 29 | 42 | 16 | 13 | 0,82 | 0,84 | 1900 | 350 |
| 5 | 36 | 14 | 5 | 45 | 0,83 | 0,84 | 1500 | 350 |
| 6 | 33 | 27 | 9 | 31 | 0,75 | 0,88 | 1750 | 250 |
| 7 | 35 | 20 | 7 | 38 | 0,90 | 0,90 | 1750 | 250 |

## Fortsetzung der Tabelle

| Nr. der Beisp. | Zusammensetzung des Werkstoffes, Masse% | | Kennziffern der Werkstoffeigenschaften | | | | |
| | MoSi$_2$ | Al$_x$Si$_y$O$_z$ + Al$_2$O$_3$ | Grenzbetriebstemperatur, °C | Spezifischer elektrischer Widerstand $\mu\Omega\cdot$cm bei Temperaturen | | Periodizität der Temperaturwechsel | |
| | | | | 20°C | 1650°C | kurzer Zyklus | langer Zyklus |
| I | 10 | 11 | 12 | 13 | 14 | 15 | 16 |
| 3 | 90 | 10 | 1870 | 48 | 320 | 243 | 180 |
| 4 | 65 | 35 | 1890 | 67 | 373 | 216 | 137 |
| 5 | 85 | 15 | 1880 | 57 | 339 | 256 | 182 |
| 6 | 75 | 25 | 1880 | 62 | 361 | 221 | 149 |
| 7 | 80 | 20 | 1900 | 60 | 351 | 243 | 165 |

Gewerbliche Anwendbarkeit

Der erfindungsgemässe Keramikverbundwerkstoff, der gegen Hochtemperaturoxydation beständig ist, wird eine breite Anwendung als Schutzüberzug und Werkstoff für elektrische Heizelemente finden, welche in der chemischen Industrie und im Hüttenwesen eingesetzt werden.

**Ansprüche**

1. Keramikverbundwerkstoff auf der Basis von Molybdändisilizid, dadurch **gekennzeichnet**, dass er auch eine feste Lösung von Silizium und Aluminiumoxid mit einem Beugungsdiagramm enthält, das mittels der Cu-K $\alpha$ -Strahlung gemessen wurde und Hauptscheitelwerte bei 2 $\theta$ = 34,90° (100%); 43,07° (100%); 52,24° (50%); 67,96° (50%) bei folgendem Verhältnis zwischen den Komponenten (Masse%):

| | |
|---|---|
| Molybdändisilizid | 65 bis 90 |
| feste Lösung von Silizium und Aluminiumoxid | 10 bis 35 |
| aufweist. | |

2. Keramikverbundwerkstoff nach Anspruch 1, dadurch **gekennzeichnet**, dass er Molybdändisilizid in in Form von Körnern mit einer Korngrösse von 20 bis 60 $\mu$m enthält.

3. Verfahren zur Herstellung von Keramikverbundwerkstoff nach Anspruch 1, das die Zubereitung eines Gemisches, welches Silizium und Molybdänverbindungen aufweist, sowie deren Wärmebehandlung vorsieht, dadurch **gekennzeichnet**, dass man in das erwähnte Gemisch als Molybdänverbindung Molybdänoxid (VI) und zusätzlich Aluminium und Molybdän bis zur Bildung einer exothermen Mischung mit einer Zusammensetzung (Masse%):

| | |
|---|---|
| Silizium | 29 bis 38 |
| Molybdänoxid (VI) | 7 bis 42 |
| Aluminium | 6 bis 16 |
| Molybdän | 13 bis 52 |

einführt, die Wärmebehandlung der exothermen Mischung unter Verbrennungsbedingungen durchführt und anschliessend die sich bildenden Verbrennungsprodukte durch eine mindestens zweifache Stauchung derselben bis zu einem Umformungsgrad von 0,75 bis 0,90 in jeder Stufe bei einer Temperatur von 1500 bis 1900° C verdichtet.

4. Verfahren nach Anspruch 3, dadurch **gekennzeichnet**, dass die Stauchung der Verbrennungsprodukte durch Durchdrücken durch eine auf 200 bis 350° C erwärmte Matrize vorgenommen wird.

5. Verfahren nach Anspruch 3, dadurch **gekennzeichnet**, dass man eine exotherme Mischung mit einer Dispersität von 1,0 bis 63 $\mu$m herstellt.

6. Verfahren nach Anspruch 5, dadurch **gekennzeichnet**, dass man die exotherme Mischung vor deren Wärmebehandlung bis zu einer relativen Dichte von 0,4 bis 0,6 verdichtet.

Geänderte Patentansprüche.

1. Verfahren zur Herstellung von Keramikverbundwerkstoff das die Zubereitung eines Gemisches, welches Silizium und Molybdänverbindungen aufweist, sowie deren Wärmebehandlung vorsieht, dadurch **gekennzeichnet**, dass man in das erwähnte Gemisch als Molybdänverbindung Molybdänoxid (VI) und zusätzlich Aluminium und Molybdän bis zur Bildung einer exothermen Mischung mit einer Zusammen-

setzung (Masse%):

| | |
|---|---|
| Silizium | 29-38 |
| Molybdänoxid | 7-42 |
| Aluminium | 3-16 |
| Molybdän | 13-52 |

einführt, die Wärmebehandlung der exothermen Mischung unter Verbrennungsbedingungen durchführt und anschliessend die sich bildenden Verbrennungsprodukte durch eine mindestens zweifache Stauchung derselben bis zu einem Umformungsgrad von 0,75 bis 0,90 in jeder Stufe bei einer Temperatur von 1500 bis 1900 °C verdichtet.

2. Verfahren nach Anspruch 1, dadurch **gekennzeichnet**, dass die Stauchung der Verbrennungsprodukte durch Durchdrücken durch eine auf 200 bis 350 °C erhitzte Matrize vorgenommen wird.

3. Verfahren nach Anspruch 1, dadurch **gekennzeichnet**, dass man eine exotherme Mischung mit einer Dispersität von 1,0 bis 63 $\mu$m herstellt.

4. Verfahren nach Anspruch 3, dadurch **gekennzeichnet**, dass man die exotherme Mischung vor der Wärmebehandlung bis zu einer relativen Dichte von 0,4 bis 0,6 verdichtet.

5. Keramikverbundwerkstoff, hergestellt nach dem Verfahren gemäss Ansprüchen 1-4, der als eine der Komponenten Molybdändisilizid in Körnerform mit einer Teilchengrösse von 20 bis 60 $\mu$m enthält.

# INTERNATIONAL SEARCH REPORT

**I. CLASSIFICATION OF SUBJECT MATTER** (If several classification symbols apply, indicate all) [6]

According to International Patent Classification (IPC) or to both National Classification and IPC

Int.Cl.[5]   C04B 35/58

**II. FIELDS SEARCHED**

| Minimum Documentation Searched [7] | |
|---|---|
| Classification System | Classification Symbols |
| Int.Cl.[5] | C04B 35/00,35/58,  C22C 29/00,29/18,C01B 33/06 |

Documentation Searched other than Minimum Documentation
to the Extent that such Documents are Included In the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | GB,B,780735,  (AKTIEBOLAGET KANTHAI), 07 August 1957 (07.08.57), claims, cited in the description | 1,2 |
| A | GB,B779128, (PLESSEY COMPANY LIMITED), 17 July 1957 (17.07.57), claims, | 1,2 |
| A | GB,B,779129 (PLESSEY COMPANY LIMITED), 17 July 1957 (17.07.57), claims | 1,2 |
| A | US,A,3726643 (FILIAL INSTITUTA KHIMICHES-KOI FI ZIKI AKADEMII NAUK), 10 April 1973 (10.04.73) SSSR | 1,6 |
| A | DE,B2,2628578 (INSTITUT CHIMITSHESKOI FISIKI AKADEMII NAUK SSSR), 06 March 80 (06.03.80), claims, example 11 | 3-6 |
| A | EP,A2,0165707 (SUMITOMO ELECTRIC INDUSTRIES LIMITED), 27 December 1985 (27.12.85) description, pages 26,28 | 3-6 |
| A | US,A2,4678760 (ALUMINIUM  COMPANY OF AMERICA), 07 July 1987 (07.07.87), claims | 3 |

---

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 18 January 1990 (18.01.90) | 27 March 1990 (27.03.90) |
| International Searching Authority | Signature of Authorized Officer |
| ISA/SU | |